(19) Europäisches Patentamt

European Patent Office

Office européen des brevets

(11) **EP 4 712 568 A1**

(12) # EUROPEAN PATENT APPLICATION
published in accordance with Art. 153(4) EPC

(43) Date of publication:
**18.03.2026 Bulletin 2026/12**

(21) Application number: **24814329.9**

(22) Date of filing: **24.05.2024**

(51) International Patent Classification (IPC):
**H04W 36/30** (2009.01)

(52) Cooperative Patent Classification (CPC):
**H04W 36/00; H04W 36/08; H04W 36/30**

(86) International application number:
**PCT/CN2024/095123**

(87) International publication number:
**WO 2024/245131 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.06.2023 CN 202310654842**

(71) Applicant: **Huawei Technologies Co., Ltd.
Shenzhen, Guangdong 518129 (CN)**

(72) Inventors:
• **LU, Rui**
  **Shenzhen, Guangdong 518129 (CN)**
• **GENG, Tingting**
  **Shenzhen, Guangdong 518129 (CN)**
• **CHEN, Jun**
  **Shenzhen, Guangdong 518129 (CN)**

(74) Representative: **Grünecker Patent- und
Rechtsanwälte
PartG mbB
Leopoldstraße 4
80802 München (DE)**

(54) **CELL RE-SELECTION METHOD AND APPARATUS**

(57)    This application provides a cell reselection method and an apparatus, which are applied to a scenario in which artificial intelligence AI is combined with a wireless network. The method includes: measuring a target cell to obtain a first measurement result in a first time period; determining a second measurement result of the target cell in a second time period based on an AI model, where input information of the AI model includes the first measurement result, and an end moment of the second time period is later than an end moment of the first time period; and performing reselection from a serving cell to the target cell if signal quality of the target cell in the second time period satisfies a preset condition, where the signal quality is determined based on the second measurement result. The measurement result obtained by measuring the target cell in the first time period is used as an input of the AI model, and the measurement result of the target cell in the second time period is obtained based on the AI model. In this way, a terminal device can determine, based on the measurement result in the second time period, to perform reselection to the target cell, improving cell reselection efficiency and reducing power consumption of the terminal device.

300

FIG. 3

## Description

This application claims priority to Chinese Patent Application No. 202310654842.8, filed with the China National Intellectual Property Administration on June 2, 2023 and entitled "CELL RESELECTION METHOD AND APPARATUS", which is incorporated herein by reference in its entirety.

## TECHNICAL FIELD

Embodiments of this application relate to the field of communication, and more specifically, to a cell reselection method and an apparatus.

## BACKGROUND

Cell reselection is a process in which a terminal device reselects a cell and camps on the cell after the terminal device accesses a network when there is a cell whose signal quality is better and/or priority is higher than that of a current serving cell. For example, cell reselection may be performed when the terminal device is in an idle state.

In an existing cell reselection procedure, the terminal device needs to measure a target cell in a preset time period, and may perform reselection to the target cell after the measurement ends only when determining that the target cell satisfies a corresponding cell reselection criterion in the preset time period. This manner prolongs cell reselection time, is unfavorable to data transmission of a delay-sensitive service, and increases power consumption of the terminal device.

## SUMMARY

Embodiments of this application provide a cell reselection method and an apparatus, to improve cell reselection efficiency and reduce power consumption of a terminal device.

According to a first aspect, a communication method is provided. The method is applied to a terminal device. The method may be performed by the terminal device, or may be performed by a component (for example, a chip or a circuit) of the terminal device. This is not limited. For ease of description, the following uses an example in which the method is performed by a first device for description.

The method may include: measuring a target cell to obtain a first measurement result in a first time period; determining a second measurement result of the target cell in a second time period based on an AI model, where input information of the AI model includes the first measurement result, and an end moment of the second time period is later than an end moment of the first time period; and performing reselection from a serving cell to the target cell if signal quality of the target cell in the second time period satisfies a preset condition, where the signal quality is determined based on the second measurement result.

According to the foregoing solution, the measurement result obtained by measuring the target cell in the first time period is used as the input information of the AI model, and the measurement result of the target cell in the second time period is obtained through prediction based on the AI model. In this way, the terminal device can determine, based on the measurement result in the second time period, to perform reselection to the target cell, improving cell reselection efficiency and reducing power consumption of the terminal device.

With reference to the first aspect, in some implementations of the first aspect, indication information is received from a network device, where the indication information indicates to determine the second measurement result in an AI prediction manner.

With reference to the first aspect, in some implementations of the first aspect, the first measurement result is a layer 1 measurement result, and the second measurement result is a layer 1 measurement result or a layer 3 measurement result. Alternatively, the first measurement result is a layer 3 measurement result, and the second measurement result is a layer 3 measurement result.

In other words, the input information of the AI model is a layer 1 measurement result, and an output is a layer 1 measurement result or a layer 3 measurement result. Alternatively, an input of the AI model is a layer 3 measurement result, and an output is a layer 3 measurement result.

According to the foregoing solution, it is designed that the input information of the AI model is a layer 1 measurement result, and the output is a layer 1 measurement result or a layer 3 measurement result; or the input of the AI model is a layer 3 measurement result, and the output is a layer 3 measurement result. Therefore, the terminal device can flexibly determine the signal quality of the target cell based on the output of the AI model.

With reference to the first aspect, in some implementations of the first aspect, if a priority of the target cell is higher than a priority of the serving cell, the preset condition includes that the signal quality of the signal quality of the target cell in the second time period is greater than or equal to a first preset threshold.

With reference to the first aspect, in some implementations of the first aspect, if a priority of the target cell is lower than a priority of the serving cell, the preset condition includes that the signal quality of the target cell in the second time period is greater than or equal to a larger value of the second preset threshold and a third preset threshold.

According to the foregoing solution, when the priority of the target cell is lower than the priority of the serving cell, the preset condition is set to that the signal quality of the target cell in the second time period is greater than or equal to the larger value of the two preset thresholds. Therefore, the terminal device can perform reselection to the target cell with good signal quality, avoiding cell reselection performed again after reselection to the target cell.

With reference to the first aspect, in some implementations of the first aspect, if a priority of the target cell is the same as a priority of the serving cell, the preset condition includes that the signal quality of the target cell in the second time period is greater than or equal to a fourth preset threshold. The fourth threshold is greater than 0. The target cell is determined based on a ranking criterion value. The ranking criterion value is determined based on the signal quality of the target cell in the second time period.

According to the foregoing solution, when the priority of the target cell is the same as the priority of the serving cell, the preset condition is set to include that the signal quality of the target cell in the second time period is greater than or equal to the fourth preset threshold. The fourth threshold is greater than 0. Therefore, the terminal device can perform reselection to the target cell with good signal quality, avoiding cell reselection performed again after reselection to the target cell.

With reference to the first aspect, in some implementations of the first aspect, duration of the second time period includes expected duration of camping on the target cell.

With reference to the first aspect, in some implementations of the first aspect, the second time period is configured by the network device.

According to the foregoing solution, a network configures the second time period to include the expected duration of camping on the target cell. Therefore, the terminal device can perform reselection to the target cell whose signal quality satisfies the preset condition within duration of camping on the target cell, avoiding cell reselection performed again after reselection to the target cell.

With reference to the first aspect, in some implementations of the first aspect, the measurement result is a measurement result of a first measurement quantity, and the first measurement quantity includes at least one of the following items: reference signal received power RSRP, reference signal received quality RSRQ, a received signal strength indicator RSSI, and a signal to interference plus noise ratio SINR.

According to a second aspect, a communication method is provided. The method is applied to a network device. The method may be performed by the network device, or may be performed by a component (for example, a chip or a circuit) of the network device. This is not limited. For ease of description, the following uses an example in which the method is performed by a first device for description.

The method may include: sending indication information to a terminal device, where the indication information indicates to determine a second measurement result in an AI prediction manner, and the second measurement result is used to determine signal quality of a target cell in a second time period, so that the terminal device performs reselection from a serving cell to the target cell when the signal quality satisfies a preset condition.

The second measurement result is a measurement result of the target cell in the second time period that is determined based on an AI model. Input information of the AI model includes a first measurement result. The first measurement result includes a measurement result of the target cell in a first time period. An end moment of the second time period is later than an end moment of the first time period.

According to the foregoing solution, the network device sends the indication information to the terminal device, so that the terminal device can use the measurement result of the target cell in the first time period obtained through measurement as the input information of the AI model, and obtain the measurement result of the target cell in the second time period through prediction based on the AI model. Therefore, the terminal device can determine, based on the measurement result in the second time period, to perform reselection to the target cell, improving cell reselection efficiency and reducing power consumption of the terminal device.

With reference to the second aspect, in some implementations of the second aspect, the first measurement result is a layer 1 measurement result, and the second measurement result is a layer 1 measurement result or a layer 3 measurement result. Alternatively, the first measurement result is a layer 3 measurement result, and the second measurement result is a layer 3 measurement result.

With reference to the second aspect, in some implementations of the second aspect, if a priority of the target cell is higher than a priority of the serving cell, the preset condition includes that the signal quality of the signal quality of the target cell in the second time period is greater than or equal to a first preset threshold.

With reference to the second aspect, in some implementations of the second aspect, if a priority of the target cell is lower than a priority of the serving cell, the preset condition includes that the signal quality of the target cell in the second time period is greater than or equal to a larger value of the second preset threshold and a third preset threshold.

With reference to the second aspect, in some implementations of the second aspect, if a priority of the target cell is the same as a priority of the serving cell, the preset condition includes that the signal quality of the target cell in the second time period is greater than or equal to a fourth preset threshold. The fourth threshold is greater than 0. The target cell is determined based on a ranking criterion value. The ranking criterion value is determined based on the signal quality of the target cell in the second time period.

With reference to the second aspect, in some implementations of the second aspect, duration of the second time period includes expected duration of camping on the target cell. For example, the second time period is configured by the network device.

For example, the measurement result is a measurement result of a first measurement quantity. For the first measurement quantity, refer to the descriptions in the first aspect.

According to a third aspect, a communication apparatus is provided. The apparatus may include a processing unit. The processing unit is configured to: measure a target cell to obtain a first measurement result in a first time period; determine a second measurement result of the target cell in a second time period based on an AI model, where input information of the AI model includes the first measurement result, and an end moment of the second time period is later than an end moment of the first time period; and perform reselection from a serving cell to the target cell if signal quality of the target cell in the second time period satisfies a preset condition, where the signal quality is determined based on the second measurement result.

With reference to the third aspect, in some implementations of the third aspect, the apparatus further includes a transceiver unit. The transceiver unit is configured to receive indication information from a network device, where the indication information indicates to determine the second measurement result in an AI prediction manner.

With reference to the third aspect, in some implementations of the third aspect, the first measurement result is a layer 1 measurement result, and the second measurement result is a layer 1 measurement result or a layer 3 measurement result. Alternatively, the first measurement result is a layer 3 measurement result, and the second measurement result is a layer 3 measurement result.

With reference to the third aspect, in some implementations of the third aspect, if a priority of the target cell is higher than a priority of the serving cell, the preset condition includes that the signal quality of the signal quality of the target cell in the second time period is greater than or equal to a first preset threshold.

With reference to the third aspect, in some implementations of the third aspect, if a priority of the target cell is lower than a priority of the serving cell, the preset condition includes that the signal quality of the target cell in the second time period is greater than or equal to a larger value of the second preset threshold and a third preset threshold.

With reference to the third aspect, in some implementations of the third aspect, if a priority of the target cell is the same as a priority of the serving cell, the preset condition includes that the signal quality of the target cell in the second time period is greater than or equal to a fourth preset threshold. The fourth threshold is greater than 0. The target cell is determined based on a ranking criterion value. The ranking criterion value is determined based on the signal quality of the target cell in the second time period.

With reference to the third aspect, in some implementations of the third aspect, duration of the second time period includes expected duration of camping on the target cell.

With reference to the third aspect, in some implementations of the third aspect, the second time period is configured by the network device.

With reference to the third aspect, in some implementations of the third aspect, the measurement result is a measurement result of a first measurement quantity, and the first measurement quantity includes at least one of the following items: reference signal received power RSRP, reference signal received quality RSRQ, a received signal strength indicator RSSI, and a signal to interference plus noise ratio SINR.

According to a fourth aspect, a communication apparatus is provided. The apparatus includes a transceiver unit. The transceiver unit is configured to send indication information to a terminal device, where the indication information indicates to determine a second measurement result in an AI prediction manner, and the second measurement result is used to determine signal quality of a target cell in a second time period, so that the terminal device performs reselection from a serving cell to the target cell when the signal quality satisfies a preset condition.

The second measurement result is a measurement result of the target cell in the second time period that is determined based on an AI model. Input information of the AI model includes a first measurement result. The first measurement result includes a measurement result of the target cell in a first time period. An end moment of the second time period is later than an end moment of the first time period.

With reference to the fourth aspect, in some implementations of the fourth aspect, the first measurement result is a layer 1 measurement result, and the second measurement result is a layer 1 measurement result or a layer 3 measurement result. Alternatively, the first measurement result is a layer 3 measurement result, and the second measurement result is a layer 3 measurement result.

With reference to the fourth aspect, in some implementations of the fourth aspect, if a priority of the target cell is higher than a priority of the serving cell, the preset condition includes that the signal quality of the signal quality of the target cell in the second time period is greater than or equal to a first preset threshold.

With reference to the fourth aspect, in some implementations of the fourth aspect, if a priority of the target cell is lower than a priority of the serving cell, the preset condition includes that the signal quality of the target cell in the second time period is greater than or equal to a larger value of the second preset threshold and a third preset threshold.

With reference to the fourth aspect, in some implementations of the fourth aspect, if a priority of the target cell is the same as a priority of the serving cell, the preset condition includes that the signal quality of the target cell in the second time period is greater than or equal to a fourth preset threshold. The fourth threshold is greater than 0. The target cell is determined based on a ranking criterion value. The ranking criterion value is determined based on the signal quality of the target cell in the second time period.

With reference to the fourth aspect, in some implementations of the fourth aspect, duration of the second time period includes expected duration of camping on the target cell. For example, the second time period is configured by a network device.

For example, the measurement result is a measurement result of a first measurement quantity. For the first measurement quantity, refer to the descriptions in the third aspect.

According to a fifth aspect, a communication apparatus is provided. The apparatus is configured to perform the method in any one of the possible implementations of the first aspect and the second aspect. Specifically, the apparatus may include a unit and/or a module configured to perform the method in any one of the possible implementations of the first aspect and the second aspect, for example, a processing unit and/or a communication unit.

In an implementation, the apparatus is a communication device (for example, a terminal device or a network device). When the apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device or a network device). When the apparatus is the chip, the chip system, or the circuit used in the communication device, the communication unit may be an input/output interface, an interface circuit, an output circuit, an input circuit, a pin, a related circuit, or the like of the chip, the chip system, or the circuit; and the processing unit may be at least one processor, a processing circuit, a logic circuit, or the like.

According to a sixth aspect, a communication apparatus is provided. The apparatus includes at least one processor, configured to execute a computer program or instructions stored in a memory, to perform the method in any one of the possible implementations of the first aspect and the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a terminal device or a network device).

In another implementation, the apparatus is a chip, a chip system, or a circuit used in a communication device (for example, a terminal device or a network device).

According to a seventh aspect, a processor is provided, configured to perform the method provided in the foregoing aspects.

Operations such as sending and obtaining/receiving related to the processor may be understood as operations such as output and input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable medium stores program code to be executed by user equipment, and the program code is used to perform the method in any one of the possible implementations of the first aspect and the second aspect.

According to a ninth aspect, a computer program product including instructions is provided. When the computer program product is run on a computer, the computer is enabled to perform the method in any one of the possible implementations of the first aspect and the second aspect.

**BRIEF DESCRIPTION OF DRAWINGS**

FIG. 1 is a diagram of a communication system according to an embodiment of this application;
FIG. 2 is a diagram of a model applicable to layer 3 measurement;
FIG. 3 is a schematic flowchart of a cell reselection method 300 according to an embodiment of this application;
FIG. 4 is a schematic flowchart of a cell reselection method 400 according to an embodiment of this application;
FIG. 5 is a schematic flowchart of a cell reselection method 500 according to an embodiment of this application;
FIG. 6 is a schematic flowchart of a cell reselection method 600 according to an embodiment of this application;
FIG. 7 is a diagram of a structure of a communication apparatus 700 according to an embodiment of this application;

FIG. 8 is a diagram of a structure of a communication apparatus 800 according to an embodiment of this application; and

FIG. 9 is a schematic block diagram of a chip system 900 according to an embodiment of this application.

## DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6th generation (6th generation, 6G) mobile communication system, or a system integrating a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A network element in the communication system may send a signal to another network element or receive a signal from another network element. The signal may include information, signaling, data, or the like. The network element may alternatively be an entity, a network entity, a device, a communication device, a communication module, a node, a communication node, or the like. In this application, the network element is used as an example for description. For example, the communication system may include at least one terminal device and at least one network device. The network device may send a downlink signal to the terminal device, and/or the terminal device may send an uplink signal to the network device.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice or data, for example, a handheld device or a vehicle-mounted device with a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a wearable device, a terminal device in a 5G network, or a terminal device in a future evolved public land mobile communication network (public land mobile network, PLMN). This is not limited in embodiments of this application.

By way of example, and not limitation, in embodiments of this application, the terminal device may alternatively be a wearable device. The wearable device may also be referred to as a wearable intelligent device, and is a generic term for wearable devices that are developed through intelligent design on daily wearables by using wearable technologies, such as glasses, gloves, watches, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, the wearable intelligent device includes a full-featured and large-sized device that can implement all or a part of functions without depending on a smartphone, for example, a smart watch or smart glasses, and a device that is dedicated to only one type of application function and needs to work with another device such as a smartphone, for example, various smart bands or smart jewelry for monitoring physical signs.

In embodiments of this application, an apparatus configured to implement a function of the terminal device may be the terminal device, or may be an apparatus that can support the terminal device in implementing the function, such as a chip system, where the apparatus may be installed in the terminal device or used in matching with the terminal device. In embodiments of this application, the chip system may include a chip, or may include a chip and another discrete component. In embodiments of this application, an example in which the apparatus configured to implement the function of the terminal device is the terminal device is merely used for description, and constitutes no limitation on the solutions in embodiments of this application.

In embodiments of this application, the network device may be a device for communicating with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover the following names in a broad sense, or may alternatively be the following names: for example, a NodeB (NodeB), an evolved base station (evolved NodeB, eNB), a next-generation base station (next-generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in the future communication system, or the like. The base station may support networks using a same access technology or different access technologies. Optionally, the RAN node may alternatively be a server, a wearable device, a vehicle, a vehicle-mounted device, or the like. For example, an access network device in a V2X technology may be a roadside unit (roadside unit, RSU). A specific technology and a specific device form that are used by the network device are not limited in embodiments of this application.

The base station may be fixed or mobile. For example, a helicopter, an unmanned aerial vehicle, a satellite, or the like may be configured as a mobile base station. One or more cells may move based on a location of the mobile base station. In other examples, a helicopter, an unmanned aerial vehicle, or a satellite may be configured as a device for communicating with another base station.

In some deployments, the network device mentioned in embodiments of this application may be a device including a CU, a device including a DU, a device including a CU and a DU, or a device including a CU control plane (central unit-control plane (central unit-control plane, CU-CP)) node, a CU user plane (central unit-user plane (central unit-user plane, CU-UP)) node, and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes separately implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

In different systems, the CU (or the CU-CP and the CU-UP), the DU, or the RU may also have different names, but a person skilled in the art may understand meanings thereof. For example, in an open radio access network (open radio access network, O-RAN) (open RAN or ORAN) system, the CU may alternatively be referred to as an O-CU (open CU), the DU may alternatively be referred to as an O-DU, the CU-CP may alternatively be referred to as an O-CU-CP, the CU-UP may alternatively be referred to as an O-CU-UP, and the RU may alternatively be referred to as an O-RU. Any one of the CU (or the CU-CP and the CU-UP), the DU, and the RU in this application may be implemented by using a software module, a hardware module, or a combination of a software module and a hardware module.

In embodiments of this application, an apparatus configured to implement a function of the network device may be the network device, or may be an apparatus that can support the network device in implementing the function, for example, a chip system, a hardware circuit, a software module, or a combination of a hardware circuit and a software module, where the apparatus may be installed in the network device or used in matching with the network device. In embodiments of this application, an example in which the apparatus configured to implement the function of the network device is the network device is merely used for description, and constitutes no limitation on the solutions in embodiments of this application.

The network device and/or the terminal device may be deployed on land, including an indoor or outdoor scenario and a handheld or vehicle-mounted scenario; may be deployed on water; or may be deployed on an airplane, a balloon, and a satellite in the air. Scenarios in which the network device and the terminal device are located are not limited in embodiments of this application. In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

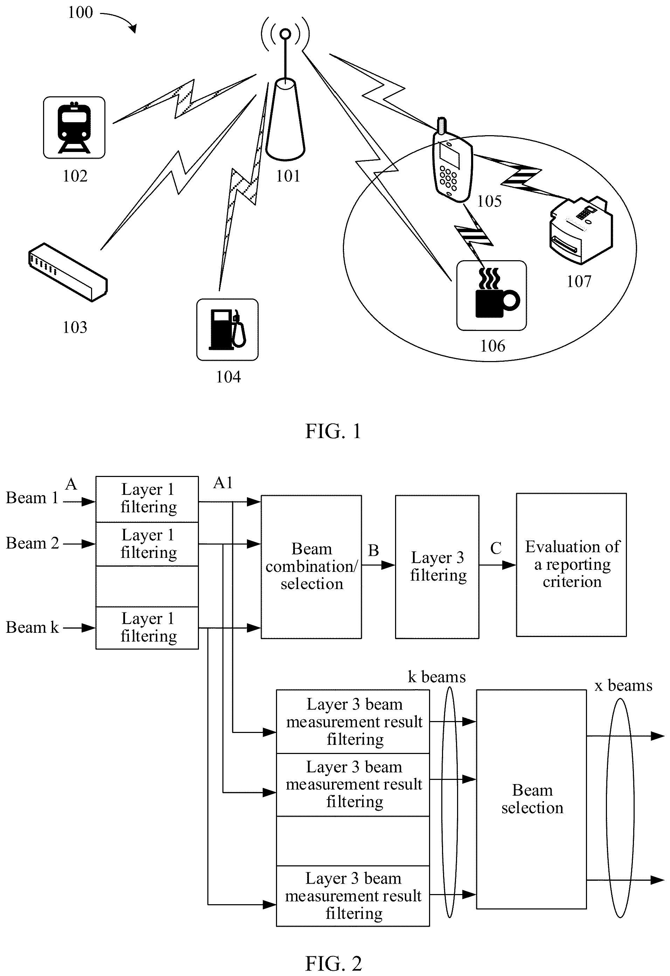

For ease of understanding embodiments of this application, a communication system shown in FIG. 1 is used as an example to describe in detail a communication system applicable to embodiments of this application. As shown in FIG. 1, the communication system 100 may include at least one network device 101 and at least one of terminal devices 102 to 107. The terminal devices 102 to 107 may be mobile or fixed. The network device 101 may communicate with one or more of the terminal devices 102 to 107 through a radio link. Each network device may provide communication coverage for a particular geographical area, and may communicate with a terminal device located in the coverage area.

Optionally, the terminal devices may directly communicate with each other. For example, direct communication between the terminal devices may be implemented by using a device-to-device (device-to-device, D2D) technology. As shown in FIG. 1, direct communication may be implemented between the terminal devices 105 and 106 and between the terminal devices 105 and 107 by using the D2D technology. The terminal device 106 and the terminal device 107 may separately or simultaneously communicate with the terminal device 105.

The terminal devices 105 to 107 may separately communicate with the network device 101. For example, the terminal devices 105 to 107 may directly communicate with the network device 101. For example, the terminal devices 105 and 106 in the figure may directly communicate with the network device 101. Alternatively, the terminal devices 105 to 107 may indirectly communicate with the network device 101. For example, the terminal device 107 in FIG. 1 communicates with the network device 101 via the terminal device 105.

A plurality of antennas may be configured for each communication device (including the network device and/or the terminal device). For each communication device in the communication system 100, the plurality of antennas configured may include at least one transmit antenna configured to send a signal and at least one receive antenna configured to receive a signal. Therefore, the communication devices in the communication system 100 may communicate with each other by using a multi-antenna technology.

An interface between the network device and the terminal device may be a Uu interface (or referred to as an air interface). Certainly, in future communication, names of these interfaces may remain unchanged, or may alternatively be other names. This is not limited in this application.

For example, communication between the network device and the terminal device complies with a specific protocol layer structure. Network layering means that work of network nodes (for example, the network device and the terminal device) such as sending, forwarding, packaging, or unpacking data, and loading or unpacking control information is implemented by different hardware and software modules. In this way, a complex problem of communication and network interconnection can be simplified.

It should be understood that FIG. 1 is merely a simplified diagram of an example for ease of understanding. The communication system 100 may further include another network device or may further include another terminal device (not shown in FIG. 1). For example, the communication system 100 may further include a core network device. An access network device provides a radio access connection for the terminal device, and may send data to the terminal device or receive data sent by the terminal device. In addition, the access network device is also connected to the core network device, and may forward, to a core network, the data received from the terminal device, or receive, from a core network, data that needs to be sent to the terminal device.

For ease of understanding embodiments of this application, some basic concepts in this application are briefly described.

It should be understood that the basic concepts described below are described by using basic concepts specified in an NR protocol as an example, but embodiments of this application are not limited to being applied only to an NR system. Therefore, standard names appearing when the NR system is used as an example for description are all functional descriptions, and specific names are not limited, indicate only functions of a device, and may be correspondingly extended to another future system.

(1) AI model: The AI model may also be referred to as an AI algorithm (or an AI operator), is a collective term of mathematical algorithms constructed according to an artificial intelligence principle, and is also a basis for resolving a specific problem by using AI. A type of the AI model is not limited in embodiments of this application. For example, the AI model may be a machine learning model, a deep learning model, a reinforcement learning model, or a federated learning model.

The AI model needs to be trained before application. AI model training is a process of performing computation on training data by using a specified initial model, and adjusting a parameter of the initial model by using a specific method based on a computing result, so that the model gradually learns a rule and has a specific function. After training, an AI model with a stable function can be used for inference. AI model inference is a process of performing computation on input data by using the trained AI model, to obtain a predicted inference result (which may also be referred to as output data).

An AI module is a module having an AI learning and computing capability. In a wireless communication system, the AI module may be located in an operation administration and maintenance (operation administration and maintenance, OAM) network element, may be located in a radio access network device (for example, located in a CU in a split architecture), may be located in a terminal device, or may be an independent network element entity. With reference to the communication system shown in FIG. 1, the AI module may be located in the network device 101 and/or one or more of the terminal devices 102 to 107. If an O-RAN architecture is used, the AI module may alternatively be disposed in a RAN intelligent controller (RAN intelligent controller, RIC). The RIC may obtain network-side and/or terminal-side information from the access network device and/or the terminal device for AI model training or inference. A training or inference result may be transmitted to a RAN node and/or the terminal device.

In a wireless communication system, the AI module is mainly used to perform a series of AI computations based on input data, such as model establishment, training approximation, and reinforcement learning. The input data may be network running data provided by the access network device or monitored by the OAM, for example, a network load and channel quality, or a user plane data transmission status provided by a core network. A trained model provided by the AI module has a prediction function for a network change on a RAN side, and may be used for load prediction, terminal device path prediction, and the like. In addition, the AI module may further perform policy inference from perspectives of network energy saving, mobility optimization, and the like based on a result of predicting RAN network performance by using the trained model, to obtain a reasonable and efficient energy saving policy, mobility optimization policy, and the like.

Model transfer: The model may be transferred from the network side to the terminal device, or transferred from the terminal device to the network side. The transfer is not limited to being implemented by using an air interface definition or a non-air interface definition. If the transfer is implemented in an air interface definition manner, the transfer may be referred to as model transfer.

(2) Cell reselection

Cell reselection is a process in which a terminal device reselects a cell and camps on the cell after the terminal device accesses a network when there is a cell whose signal quality is better and/or priority is higher than that of a current serving cell. For example, cell reselection may be performed when the terminal device is in an idle state. A cell reselection procedure is as follows.

First, the terminal device determines, based on priority information of a neighbor cell (neighbor cell) and signal quality of the current serving cell, whether to start measurement on the neighbor cell. A determining rule is as follows.

If a priority of the neighbor cell is higher than a priority of the serving cell, the terminal device unconditionally starts measurement.

If a priority of the neighbor cell is the same as a priority of the serving cell, the serving cell and the neighbor cell are intra-frequency cells, and for the serving cell, $S_{rxlev} \leq S_{intrasearchP}$ and $S_{qual} \leq S_{intrasearchQ}$, the terminal device starts intra-frequency cell measurement; or if the serving cell and the neighbor cell are inter-frequency cells, and for the serving cell, $S_{rxlev} \leq S_{nonIntrasearchP}$ and $S_{qual} \leq S_{nonintrasearchQ}$, the terminal device starts inter-frequency cell measurement.

If a priority of the neighbor cell is lower than a priority of the serving cell, and for the serving cell, $S_{rxlev} \leq S_{nonIntrasearchP}$ and $S_{qual} \leq S_{nonintrasearchQ}$, the terminal device starts inter-frequency cell or inter-system cell measurement.

Specifically, the terminal device may obtain the priority information from a system message from the current serving cell. The priority information is configured by a network side, and is sent to the terminal device in a cell broadcast manner. For example, the terminal device may obtain the priority information from a SIB2 of the current serving cell. The SIB2 carries a cell reselection priority (cellReselectionPriority) field, and a value of the field ranges from 0 to 7. A larger value of the field indicates a higher reselection priority of a cell on a corresponding carrier frequency.

$S_{intrasearchP}$ and Sintrasearchq indicate intra-frequency measurement thresholds. $S_{nonIntrasearchP}$ and $S_{nonintrasearchQ}$ indicate inter-frequency or inter-system measurement thresholds.

Srxlev and Squal may be used to represent signal quality of the serving cell. In an example, Srxlev and Squal are respectively represented by using the following formulas:

$$\text{Srxlev} = Q_{rxlevmeas} - (Q_{rxlevmin} + Q_{rxlevminoffset}) - P_{compensation} - \text{Qoffset}_{temp} \qquad (1)$$

$$\text{Squal} = Q_{qualmeas} - (Q_{qualmin} + Q_{qualminoffset}) - \text{Qoffset}_{temp} \qquad (2)$$

Parameters in the formulas (1) and (2) are shown in Table 1.

Table 1

| $Q_{rxlevmeas}$ | Measured cell receive level value (measured cell RX level value) |
|---|---|
| $Q_{qualmeas}$ | Measured cell quality value (measured cell quality value) |
| $Q_{rxlevmin}$ | Minimum required receive level in the cell (minimum required RX level in the cell) |
| $Q_{qualmin}$ | Minimum required quality level in the cell (minimum required quality level in the cell) |

(continued)

| Q$_{rxlevminoffset}$ | Offset to the signalled Q$_{rxlevmin}$ taken into account in the formula (1) (offset to the signalled Q$_{rxlevmin}$ taken into account in the Srxlev evaluation): Because a PLMN with a higher priority needs to be periodically searched for during normal camping on a visited public land mobile network (visited public land mobile network, VPLMN), the offset to the signalled Q$_{rxlevmin}$ is taken into account in the formula (1). |
|---|---|
| Q$_{qualminoffset}$ | Offset to the signalled Q$_{qualmin}$ taken into account in the formula (2) (offset to the signalled Q$_{qualmin}$ taken into account in the Squal evaluation): Because the PLMN with the higher priority needs to be periodically searched for during normal camping on the VPLMN, the offset to the signalled Q$_{qualmin}$ is taken into account in the Squal formula. |
| P$_{compensation}$ | P$_{compensation}$ is max(P$_{EMAX}$ - P$_{PowerClass}$, 0), where P$_{EMAX}$ is a maximum output power that may be used by UE for uplink transmission and that is allowed by the network device (maximum TX power level of a UE may use when transmitting on the uplink in the cell), P$_{PowerClass}$ is a maximum output power (maximum output power) determined based on a power class of the UE, and P$_{EMAX}$ is a maximum output power that the network device allows the UE to use. |
| Qoffset$_{temp}$ | Offset temporarily applied to the cell (offset temporarily applied to a cell) |

In some examples, Q$_{rxlevmeas}$ may be reference signal received power (reference signal received power, RSRP), and Q$_{qualmeas}$ may be reference signal received quality RSRQ (reference signal received quality, RSRQ). Other parameters in the formula (1) and the formula (2) may be obtained from the system message.

If the foregoing measurement starting condition is satisfied, the terminal device may perform measurement on the neighbor cell based on a measurement configuration of the network side. For example, the measurement configuration may include the following information: a measurement object, a measurement report configuration, a measurement identifier (identification, ID), a measurement quantity configuration, and a measurement gap configuration.

The measurement object may include a synchronization signal and PBCH block (synchronization signal and PBCH block, SSB) subcarrier spacing, an SSB measurement timing configuration (SSB measurement timing configuration, SMTC), a cell trustlist, a cell blocklist, and the like.

The measurement ID is used to associate the measurement object with the measurement configuration. To be specific, the terminal device reports the measurement ID to the network side, so that the network side can determine the measurement object and the measurement report configuration based on the measurement ID, to determine a specific event for which a measurement report is.

The measurement quantity configuration indicates a measurement quantity and a layer 3 (layer 3, L3) filtering coefficient. The measurement quantity includes at least one of the following items:

reference signal received power (reference signal received power, RSRP) reflecting received strength of a reference signal; a received signal strength indicator (received signal strength indicator, RSSI) reflecting total signal strength of a current channel; reference signal received quality RSRQ (reference signal received quality, RSRQ) reflecting a signal-to-noise ratio and an interference level for quality of the current channel and approximate to a ratio of the RSRP to the RSSI; and a signal to interference plus noise ratio (signal to interference plus noise ratio, SINR) reflecting a signal to interference ratio of the current channel.

The L3 filtering coefficient is used for L3 filtering (filtering) to obtain a final measurement result for reporting.

The terminal device may perform measurement by using a layer 3 measurement model shown in FIG. 2. First, the terminal device measures an SSB or a CSI-RS detected at layer 1 (layer 1, L1), to obtain a measurement result. As shown in FIG. 2, a point A corresponds to a measurement result of a specific beam (beam) sample (for example, a beam 1 to a beam k) at a physical layer. Then, the terminal device performs L1 filtering on the measurement result input at the point A, to obtain a beam measurement result. For example, A1 in FIG. 2 corresponds to a measurement result obtained through L1 filtering. Subsequently, the terminal device inputs the beam-level measurement result into a radio resource control (radio resource control, RRC) layer for further processing (for example, beam combination or selection in FIG. 2), to obtain a cell-level measurement result (for example, a measurement result at B in FIG. 2), and further performs layer 3 filtering on the measurement result at B to obtain a final measurement result for evaluation of a reporting criterion. Alternatively, layer 3 beam measurement result filtering is performed on the obtained beam measurement result, and x beams are selected from the k beams.

After obtaining a measurement result of the neighbor cell through measurement, the terminal device determines, based on the measurement result and cell reselection criteria (cell reselection criteria), whether to perform cell reselection. The cell reselection criteria are as follows.

For a neighbor cell whose priority is higher than that of the serving cell, if a parameter threshServingLowQ is broadcast in system information (the SIB2), and the terminal device camps on the current serving cell for more than one second, cell reselection is performed in the following case:

$S_{qual}$ of the neighbor cell is greater than $Thresh_{X,HighQ}$ in a preset time period; or
if a parameter threshServingLowQ is not broadcast in system information (the SIB2), and the terminal device camps on the current serving cell for more than one second, cell reselection is performed in the following case:
$S_{rxlev}$ of the neighbor cell is greater than $Thresh_{X,HighP}$ in a preset time period.

For a neighbor cell whose priority is the same as that of the serving cell, whether to perform reselection to the neighbor cell is determined based on a ranking (Ranking) criterion for cell reselection. The ranking criterion for cell reselection is defined as follows:

$$R_s = Q_{meas,s} + Q_{hyst} - Q_{offset,temp} \qquad (3)$$

$$R_n = Q_{meas,s} - Q_{offset} - Q_{offset,temp} \qquad (4)$$

$R_s$ represents a ranking value of the serving cell, and $R_n$ represents a ranking value of the neighbor cell.

$Q_{hyst}$: is a hysteresis value. A larger value indicates a larger boundary of the serving cell and a lower probability of reselection to the neighbor cell.

$Q_{meas,s}$: is a received signal strength value of the serving cell obtained by the terminal device through measurement.

$Q_{offset}$: If the serving cell and the neighbor cell are intra-frequency cells, when $Q_{offsets,n}$ is valid, a value of $Q_{offset}$ is $Q_{offsets,n}$ ($Q_{offsets,n}$ may be obtained from a SIB3), or when $Q_{offsets,n}$ is invalid, a value of $Q_{offset}$ is 0; or if the serving cell and the neighbor cell are inter-frequency cells, **when** $Q_{offsets,n}$ is valid, a value of $Q_{offset}$ is $Q_{offsets,n}$ + Qoffsetfrequency (Qoffsets,n and Qoffsetfrequency may be obtained from a SIB4), or when $Q_{offsets,n}$ is invalid, a value of $Q_{offset}$ is $Q_{offsetfrequency}$.

$Q_{offset,temp}$: may represent an offset.

The terminal device may rank, based on ranking values, all neighbor cells that satisfy an S criterion. If a rangeToBestCell parameter is not configured for the terminal device, the terminal device selects a cell with a maximum R value as a target cell.

If a rangeToBestCell parameter is configured for the terminal device, the terminal device finds a maximum R value from the ranking, and determines a cell with a largest quantity of beams exceeding a threshold (for example, abs-ThreshSS-BlocksConsolidation) in cells whose R values differ from the maximum R value within a specific range (for example, x dB, where x is configurable, for example, configured by using rangeToBestCell) as a target cell. If there is more than one cell with the largest quantity of beams exceeding the threshold, a cell with a largest R value is selected as the target cell.

The S criterion is: Srxlev > 0, and Squal > 0. For computing formulas of Srxlev and Squal, refer to the formula (1) and the formula (2).

If the target cell selected in the foregoing steps is not the current serving cell, it is determined whether the target cell satisfies the following conditions; and if the target cell satisfies the following conditions, the terminal device performs cell reselection to the target cell; or if the target cell does not satisfy the following conditions, the terminal device continues to camp on the serving cell:

the target cell satisfies the cell reselection criteria in the foregoing steps in a preset time period; and
camping time of the terminal device on the current serving cell exceeds 1s.

It should be understood that the foregoing computing formulas of $R_s$ and $R_n$ are merely examples. With evolution of a communication protocol version, the computing formulas of $R_s$ and $R_n$ may change. This is not limited in this application. A parameter and a criterion for cell reselection are not limited in embodiments of this application.

For a neighbor cell whose priority is lower than that of the serving cell, if a parameter threshServingLowQ is broadcast in system information (the SIB2), and the terminal device camps on the current serving cell for more than one second, cell reselection is performed in the following case:

$S_{qual}$ of the serving cell is less than $Thresh_{Serving, LowQ}$; and
$S_{qual}$ of the neighbor cell is greater than $Thresh_{X,LowQ}$ in a preset time period; or
if a threshServingLowQ field is not broadcast in system information (the SIB2), and the terminal device camps on the current serving cell for more than one second, cell reselection may be performed in the following case:

$S_{rxlev}$ of the serving cell is less than $Thresh_{Serving, LowP}$; and

$S_{rxlev}$ of the neighbor cell is greater than $Thresh_{X,LowP}$ in a preset time period.

Duration of the preset time period in the cell reselection criteria is configured by the network side for the UE, or may be predefined. For example, the preset time period may be represented as $T_{reselectionRAT}$. The duration of the preset time period may vary in different cases. For example, duration of the preset time period when frequencies of the target cell and the serving cell are the same may be different from duration of the preset time period when the frequencies of the target cell and the serving cell are different.

It can be learned from the foregoing cell reselection procedure that the terminal device can perform reselection to the target cell only when determining that the target cell satisfies the corresponding cell reselection criteria in the preset time period. In other words, the terminal device needs to measure the target cell in the preset time period, to determine whether the target cell satisfies the corresponding cell reselection criteria in the preset time period. In this manner, a cell reselection delay is increased, which is unfavorable for data transmission of a delay-sensitive service. In addition, power consumption of the terminal device is increased.

In view of this, embodiments of this application provide a cell reselection method and an apparatus, to improve cell reselection efficiency and reduce power consumption of a terminal device.

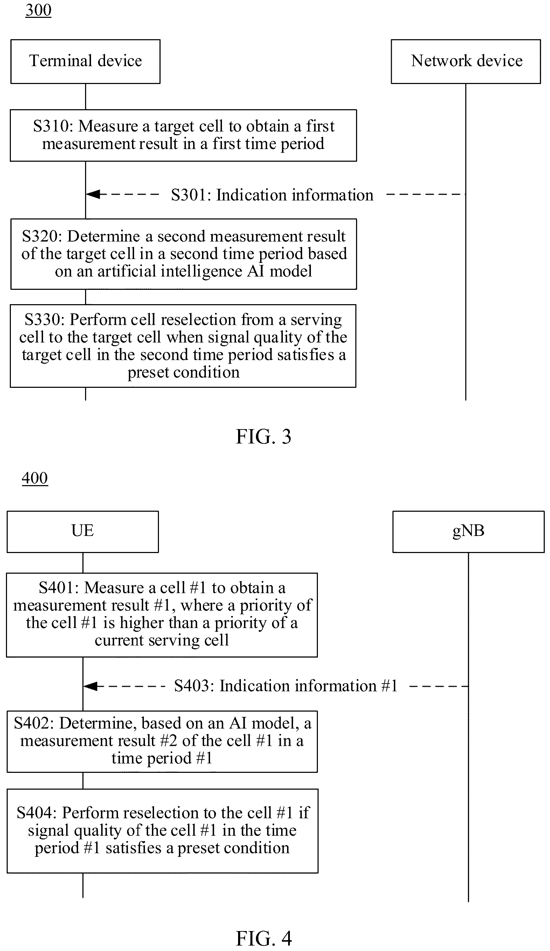

FIG. 3 is a schematic flowchart of a cell reselection method 300 according to an embodiment of this application. The method 300 may be implemented by a terminal, or may be implemented by a component (for example, a chip or a circuit) that can be used in a terminal device. This is not limited in this application. The following uses an example in which the method is performed by the terminal device for description. The method 300 may include the following steps.

S310: The terminal device measures a target cell to obtain a first measurement result in a first time period.

For example, the target cell is a neighbor cell of a serving cell on which the terminal device currently camps; or the target cell may be a candidate cell to which the terminal device is to initiate cell reselection. It may be understood that a quantity of neighbor cells or candidate cells may be one or more.

For example, when a priority of the target cell is higher than a priority of the current serving cell, or signal quality of the current serving cell is less than a preset threshold, the terminal device starts measurement on the target cell, to obtain the first measurement result in the first time period. The first measurement result may include at least one measurement result, and the at least one measurement result may be a measurement result at at least one measurement time point in the first time period.

It should be understood that a case in which the signal quality of the serving cell is equal to the preset threshold is not limited in this embodiment of this application. For example, when the signal quality of the serving cell is equal to the preset threshold, the terminal device may measure the target cell; or when the signal quality of the serving cell is equal to the preset threshold, the terminal device does not measure the target cell.

Specifically, the terminal device may start measurement on at least one neighbor cell between a first moment (a start moment of the first time period) and a second moment (an end moment of the first time period), to obtain at least one measurement result of each of all or a part of cells in the at least one neighbor cell. The at least one neighbor cell includes the target cell.

For example, the first moment may be a moment at which the terminal device determines, based on a broadcast message, that the priority of the target cell is higher than the priority of the current serving cell, or that the signal quality of the current serving cell is less than the preset threshold. The second moment may be a moment at which the terminal device determines that signal quality of the target cell (determined by a measurement result at the second moment) satisfies a preset condition.

The first measurement result may be used to represent the signal quality of the target cell in the first time period. The first measurement result may be a measurement result obtained by measuring at least one of the following measurement quantities of a reference signal: RSRP, RSRQ, an RSSI, and a SINR. The reference signal may be a synchronization signal and PBCH block (synchronization signal and PBCH block, SSB), a channel state information reference signal (channel state information reference signal, CSI-RS), or another reference signal.

S320: The terminal device determines a second measurement result of the target cell in a second time period based on an AI model.

In an implementation, "determining" may be understood as "predicting" or "obtaining through inference".

For example, input information of the AI model includes the first measurement result. Optionally, an input of the AI model further includes a historical measurement result, for example, a measurement result obtained by the terminal device before the first moment. A content category of the historical measurement result is the same as that of the first measurement result, but the historical measurement result and the first measurement result are obtained through measurement at different time.

It may be understood that the AI model is an AI model obtained through model training, and training data for the AI model may include the historical measurement result. For example, the historical measurement result includes measurement results of the foregoing measurement quantity of each cell in at least one cell in a plurality of time periods. In other words, the AI model obtained through model training may have a function of predicting a measurement result based on a known measurement result.

The input of the AI model may include an L1 measurement result or an L3 measurement result of the foregoing measurement quantity, that is, the first measurement result may be an L1 measurement result or an L3 measurement result. The L1 measurement result may be understood as a measurement result corresponding to A1 in FIG. 3, and the L3 measurement result may be understood as a measurement result corresponding to C in FIG. 3. A measurement result output by the AI model may include an L1 measurement result or an L3 measurement result. A type of the measurement result input into the AI model and a type of the measurement result output by the AI model may be related to a design of the AI model.

For example, the AI model may be designed to obtain an L1 measurement result through inference based on an L1 measurement result. Alternatively, the AI model may be designed to obtain an L3 measurement result through inference based on an L1 measurement result. Alternatively, the AI model may be designed to obtain an L3 measurement result through inference based on an L3 measurement result.

Based on the design of the AI model, the input information and output information of the AI model may specifically include the following several examples, and different input/output types correspond to different operation modes.

Example #1: The input information of the AI model includes an L1 measurement result (that is, the first measurement result is an L1 measurement result), and the output information of the AI model includes an L1 measurement result (that is, the second measurement result is an L1 measurement result). In this example, the terminal device may perform processing such as beam combination and layer 3 filtering on the L1 measurement result output by the AI model, to obtain an L3 measurement result. An existing configuration may be reused for a layer 3 filtering-related coefficient.

Example #2: The input information of the AI model includes an L1 measurement result (that is, the first measurement result is an L1 measurement result), and the output information of the AI model includes an L3 measurement result (that is, the second measurement result is an L3 measurement result). In this example, beam combination and layer 3 filtering have been integrated into the AI model. A network device may not need to configure a layer 3 filtering-related parameter for the terminal device.

Example #3: The input information of the AI model includes an L3 measurement result (that is, the first measurement result is an L3 measurement result), and the output information of the AI model includes an L3 measurement result (that is, the second measurement result is an L3 measurement result).

Optionally, the input information of the AI model may further include at least one of the following information.

(1) Information about the terminal device

For example, the information about the terminal device may include at least one of the following: movement information of the terminal device (for example, a movement speed and a movement direction), location information of the terminal device (for example, location information determined based on a global navigation satellite system (global navigation satellite system, GNSS) positioning capability of UE, and a tracking area (tracking area, TA) in which the terminal device is located), capability information of the terminal device (for example, maximum computing power supported by the terminal device, a hardware capability of the terminal device, and an AI task type supported by the terminal device), and a type of the terminal device (for example, a handheld terminal device, an airborne terminal device, or a vehicle-mounted terminal device).

(2) Channel parameter

For example, the channel parameter is a frequency, a line of sight (line of sight, LOS), or a non line of sight (non line of sight, NLOS).

(3) Site information

For example, the site information is a type of a site, for example, a ground station, an unmanned aerial vehicle (unmanned aerial vehicle, UAV), or a satellite, or an engineering parameter such as a speed and a height of the site.

(4) Environment information or network coverage map

For example, the environment information may be information that describes an environment around the terminal device, such as a height of a building or a height of a tree. The network coverage map may be information that is about signal coverage strength at different locations in a given area and that is provided by an operator, or may be a map of signal coverage strength at different locations that is established by the terminal device, or another parameter with a similar function.

(5) Model-related information

For example, the model-related information is an output type of the AI model (for example, an L1 measurement result or an L3 measurement result).

In an implementation, the first time period and/or the second time period are/is configured by the network device for the terminal device. For example, the network device sends, to the terminal device by using an RRC message, information indicating the first time period and/or the second time period, or sends, to the terminal by using a broadcast message, information indicating the first time period and/or the second time period.

An end moment (denoted as a fourth moment) of the second time period may be later than an end moment (that is, the second moment) of the first time period.

In an example, the second time period includes the first time period. To be specific, the terminal device measures the target cell to obtain the at least one measurement result of the target cell in the first time period, and the terminal device predicts at least one measurement result (the second measurement result) of the target cell from the first moment to the fourth moment based on the AI model.

In other words, the at least one measurement result of the target cell in the second time period that is obtained by the terminal device through prediction includes the at least one measurement result of the target cell in the first time period.

The at least one measurement result of the target cell in the first time period that is obtained through prediction may be used to verify prediction accuracy of the AI model. For example, the prediction accuracy of the AI model may be obtained by comparing the first measurement result with the at least one measurement result of the target cell in the first time period that is obtained through prediction.

In another example, the second time period partially overlaps the first time period. To be specific, a start moment (a third moment) of the second time period is later than the first moment and earlier than the second moment. In other words, at least one measurement result of the target cell in the second time period that is obtained by the terminal device through prediction includes at least one measurement result of the target cell from the third moment to the second moment.

The at least one measurement result of the target cell from the third moment to the second moment that is obtained through prediction may be used to verify prediction accuracy of the AI model.

In still another example, a start moment of the second time period includes the second moment or is later than the second moment. In other words, the terminal device predicts a measurement result of the target cell in a time period (the second time period) after the second moment based on the AI model. The start moment of the second time period may include the second moment.

Optionally, duration of the second time period is less than or equal to maximum duration (denoted as duration #1) in which the AI model can perform prediction. In other words, the AI model can predict a measurement result within T0 + the duration #1 based on a measurement result at a moment T0.

The second time period may be configured by the network device. For example, the duration of the second time period is an expected shortest duration of camping on the target cell.

Optionally, before configuring the second duration, the network device obtains prediction capability information of the AI model (for example, the terminal may report an AI prediction capability to the network device). The prediction capability information indicates maximum duration in which the AI model can perform prediction.

Optionally, in an implementation, before S320, the method further includes the following step.

S301: The network device sends indication information to the terminal device. Correspondingly, the terminal device receives the indication information from the network device.

The network device may be a cell to which the serving cell belongs. In other words, a coverage area of the network device includes the serving cell. The indication information may indicate to determine the second measurement result in an AI prediction manner. In other words, the indication information may indicate to perform cell reselection in the AI prediction manner.

For example, the indication information may include at least one of the following information.

(1) Information #1

The information #1 indicates a type of the input information of the AI model, for example, an L1 measurement result or an L3 measurement result. In other words, the information #1 implicitly indicates to determine the second measurement result in the AI prediction manner.

It may be understood that the terminal device may determine the type of the input information of the AI model, that is, a type of the first measurement result, based on the information #1. In other words, the terminal device may determine, based on the information #1, the L1 measurement result or the L3 measurement result of the target cell in the first time period that is obtained through measurement.

(2) Information #2

The information #2 indicates to select an AI model #1 (the AI model described above) from a plurality of AI models. For example, the terminal device may load the plurality of AI models applicable to different scenarios, and the network device may indicate, by using the information #2, the terminal to select the model #1 to predict the measurement result for cell reselection.

The information #2 may implicitly indicate to determine the second measurement result in the AI prediction manner.

(3) Information #3

The information #3 indicates to determine the second measurement result by using the AI model. For example, the information #3 may be information dedicated to indicating to "determine the second measurement result in the AI prediction manner". Alternatively, the information #3 indicates the terminal device to perform cell reselection in a manner of predicting a measurement quantity by using the AI model.

In other words, if the network device sends the information #3 to the terminal device, the terminal device may perform cell reselection based on the second measurement result predicted based on the AI model; or if the network device does not send the information #3 to the terminal device, the terminal device performs cell reselection in an existing manner.

(4) Information #4

The information #4 indicates at least one time point in the first time period, that is, indicates a specific time point for which the terminal predicts a measurement value.

For example, the at least one time point in the first time period may be distributed at an equal interval, or may be distributed at an unequal interval. This is not specifically limited.

The information #4 indicates the at least one time point in a plurality of manners. For example, the information #4 may include an offset of each time point in the at least one time point relative to a reference time point. The reference time point may be a time point at which the AI model performs prediction.

In addition, a maximum value (that is, a time point farthest from current time) of the at least one time point needs to meet the AI prediction capability of the terminal. Therefore, when configuring the at least one time point in the first time period, the network device needs to first learn of the AI prediction capability of the terminal (for example, the terminal may report the AI prediction capability to the network device), to ensure that configured prediction time is not beyond a maximum time range in which the terminal can perform prediction. The indication information may be carried in downlink control information (downlink control information, DCI), RRC signaling such as an RRC release (release) message, other downlink signaling, a broadcast message, or the like. This is not limited.

In a possible implementation, the network device may send the indication information and a measurement configuration (denoted as first configuration information) used to measure the target cell. For example, the indication information and the measurement configuration are carried in a same message, or the measurement configuration includes the indication information. A sending manner of the indication information is not limited in this application.

For example, the first configuration information may include configuration information required for cell reselection, for example, a related priority parameter and a threshold parameter for cell reselection.

Optionally, the first configuration information further includes the information #3. The information #3 indicates at least one time point in the second time period, that is, indicates a specific time point in the second time period for which the terminal device predicts a measurement result. For example, the information #3 may include an offset of each time point in the at least one time point relative to the reference time point. The reference time point may be the time point at which the AI model starts prediction.

For example, the at least one time point may be distributed at an equal interval, or may be distributed at an unequal interval. This is not specifically limited.

S330: The terminal device performs cell reselection from the serving cell to the target cell when the signal quality of the target cell in the second time period satisfies the preset condition.

The signal quality of the target cell in the second time period is determined based on the second measurement result. The signal quality may be represented by an S parameter or an R parameter. For definitions of the S parameter and the R parameter, refer to the foregoing descriptions.

In an example, if the second measurement result is an L1 measurement result, the terminal device processes the L1 measurement result (for example, performs beam combination and L3 filtering processing at an RRC layer) to obtain an L3 measurement result. For details, refer to Example #1 in S320. The terminal device determines the signal quality of the target cell based on the L3 measurement result.

In another example, if the second measurement result is an L3 measurement result, the terminal device determines the signal quality of the target cell based on the L3 measurement result. For details, refer to Example #2 or #3 in S320.

Specifically, the signal quality of the target cell may be represented by a first parameter, and a value of the first parameter is obtained based on the L3 measurement result.

According to different priorities of the target cell, the preset condition may include any one of the following.

(1) If the priority of the target cell is higher than the priority of the serving cell, the preset condition includes that the signal quality of the target cell in the second time period is greater than a first preset threshold.

That the signal quality of the target cell is greater than the first preset threshold may be understood as that the value of the first parameter representing the signal quality of the target cell is greater than the first preset threshold. For example, the first parameter may be $S_{qual}$ or $S_{rxlev}$, and the first preset threshold is a preset threshold corresponding to $S_{qual}$ or a preset threshold corresponding to $S_{rxlev}$.

(2) If the priority of the target cell is lower than the priority of the serving cell, the preset condition includes that the signal quality of the target cell in the second time period is greater than a larger value of a second preset threshold and a third preset threshold.

The second preset threshold may be a preset threshold used to determine whether to start measurement on the target cell, and the second preset threshold is greater than 0. The third preset threshold may be a preset threshold used to determine the signal quality of the target cell. For example, the signal quality of the target cell is represented by the first parameter, the first parameter may be $S_{qual}$ or $S_{rxlev}$, and the third preset threshold is a preset threshold corresponding to $S_{qual}$ or a preset threshold corresponding to $S_{rxlev}$.

The third preset threshold may be the same as or different from the first preset threshold. This is not limited.

The second preset threshold is configured, so that the terminal device can select a cell with good signal quality as the target cell, avoiding cell reselection performed by the terminal device again after reselection to the target cell.

(3) If the priority of the target cell is the same as the priority of the serving cell, the preset condition includes that the signal quality of the target cell in the second time period is greater than or equal to a fourth preset threshold. The fourth threshold is greater than or equal to 0. The target cell is determined based on a ranking criterion value. The ranking criterion value and/or the signal quality are/is determined based on a predicted value of a measurement quantity of the target cell in the second time period.

The fourth preset threshold may be a preset threshold used to determine whether to start measurement on the target cell. That the target cell is determined based on the ranking criterion value may be understood as follows: The ranking criterion value corresponding to the target cell is the largest. Alternatively, a quantity of beam-level measurement results (for example, measurement results at A1 in FIG. 2) of the target cell that are greater than a first threshold is the largest, and the ranking criterion value of the target cell is within a first range, where the first range is a range corresponding to a maximum ranking criterion value, and the first threshold and the first range may be configured by the network device.

The fourth preset threshold is configured to be greater than 0, so that the terminal device can select a cell with good signal quality as the target cell, avoiding cell reselection performed by the terminal device again after reselection to the target cell.

It should be understood that the preset condition may further include a case in which the signal quality of the target cell is equal to the preset threshold. This is not limited in this embodiment of this application.

For example, if the priority of the target cell is higher than the priority of the serving cell, when the signal quality of the target cell is equal to the first preset threshold, the terminal device may perform reselection to the target cell; or when the signal quality of the target cell is equal to the first preset threshold, the terminal device does not perform reselection to the target cell.

The preset threshold in the preset condition may be configured by the network device.

Optionally, the condition for the terminal device to perform reselection from the serving cell to the target cell further includes: Duration in which the terminal device camps on the serving cell is greater than or equal to first duration. For example, preset duration is 1 second (s).

According to the foregoing solution, the signal quality of the target cell in the second time period is predicted by using the AI model, and when the signal quality of the target cell satisfies the preset condition, reselection to the target cell is performed, without actually performing cell measurement in the second time period. This can improve cell reselection efficiency, and reduce energy consumption of the terminal device.

With reference to FIG. 4 to FIG. 6, the following describes in detail the cell reselection method 300 provided in this application by using a relationship that the priorities of the target cell and the serving cell are different. It may be understood that embodiments shown in FIG. 4 to FIG. 6 are based on the embodiment shown in FIG. 3. For descriptions of the cell reselection method provided in this application, mutual reference may be made between embodiments. Content described in the embodiment shown in FIG. 3 is not described again. In addition, the embodiments shown in FIG. 4 to FIG. 6 are described by using an example in which UE is used as the terminal device and a gNB is used as the network device.

FIG. 4 is an example flowchart of a cell reselection method 400 according to this application. In this method, a priority of a target cell is higher than a priority of a current serving cell. The method 400 may include the following steps.

S401: UE measures a cell #1 (an example of the target cell) to obtain a measurement result #1 (an example of a first measurement result), where a priority of the cell #1 is higher than the priority of the current serving cell.

For example, the UE may determine, based on a SIB message from the current serving cell, that a priority of at least one neighbor cell is higher than the priority of the current serving cell. The UE starts measurement on the at least one neighbor cell at a moment t0 (an example of a first moment), to obtain a measurement result of each cell in the at least one neighbor cell from the moment t0 to a moment t2 (an example of a second moment). The at least one neighbor cell includes the cell #1.

The measurement result #1 may include at least one measurement result of the cell #1 from the moment t0 to the moment t2.

S402: The UE determines, based on an AI model, a measurement result #2 (an example of a second measurement result) of the cell #1 in a time period #1 (an example of the second time period).

A start moment of the time period #1 is a moment t1, and an end moment is a moment t3. The moment t1 coincides with the moment t2, or the moment t1 is later than the moment t2. The moment t3 is later than the moment t2.

Optionally, the UE may further predict, based on the AI model, a measurement result of the cell #1 at a moment before the time period #1. The measurement result may be used to verify accuracy of the measurement result predicted by the AI model. For details, refer to the descriptions of S320.

Optionally, the time period #1 may be determined based on a TreselectionRAT parameter. For example, a length of the time period #1 is TreselectionRAT.

Optionally, the time period #1 may be configured by the gNB by using a newly defined parameter configuration (different from TreselectionRAT). Duration of the time period #1 may include $T_{reselectionRAT}$. Alternatively, duration of the time period #1 may be less than $T_{reselectionRAT}$. Alternatively, duration of the time period #1 is configured by the gNB by using the newly defined parameter configuration.

For example, the UE may predict, at the moment t2 based on the AI model, measurement results of the cell #1 at an interval of T time periods (T>0) in the time period #1.

For example, the UE predicts, at the moment t1, measurement results at moments t1+T, t1+2T, ..., and t1+nT, where t1+nT is less than or equal to t3, and n is a positive integer. In other words, the measurement result #2 may include at least one measurement result corresponding to the moment t1+T, t1+2T, ..., and t1+$T_{reselectionRAT}$. Alternatively, the time points for which prediction is performed may be at unequal intervals.

In a possible implementation, the UE determines signal quality of the at least one neighbor cell (for example, based on the measurement result of the at least one neighbor cell in S401), selects a neighbor cell (denoted as a first cell) that satisfies a preset condition (refer to a preset condition in an existing cell reselection criterion or a preset condition in S404 below) from the at least one neighbor cell, and predicts a measurement result of each cell in the first cell in the time period #1 (an example of the second time period). The first cell includes the cell #1, and the measurement result of each cell includes the measurement result (an example of the second measurement result) of the cell #1.

In another possible implementation, the UE determines, based on the AI model, the measurement result of each cell in the at least one neighbor cell in the time period #1, where the at least one neighbor cell includes the cell #1.

For the AI model, refer to the descriptions of S320. Input information of the AI model includes the measurement result #1.

Optionally, before S402, the method may further include the following step.

S403: The gNB sends indication information #1 to the UE. Correspondingly, the UE receives the indication information #1 from the gNB.

The indication information #1 is an example of the indication information in S401.

The indication information #1 may indicate to determine the second measurement result in an AI prediction manner. In other words, the indication information may indicate to perform cell reselection in the AI prediction manner. For specific content of the indication information #1, refer to the descriptions of S301. S403 may be performed before S401.

S404: Perform reselection to the cell #1 if signal quality of the cell #1 in the time period #1 satisfies the preset condition.

The preset condition may include: For a cell, $S_{qual} > Thresh_{X, HighQ}$, or $S_{rxlev} > Thresh_{X, HighP}$.

The signal quality of the cell #1 in the time period #1 may be represented by $S_{qual}$ or $S_{rxlev}$ (an example of the first parameter) of the cell #1. $S_{qual}$ or $S_{rxlev}$ of the cell #1 may be determined based on the measurement result #2. For a specific determining manner, refer to the formula (1) or the formula (2). For example, the measurement result #2 may be $Q_{rxlevmeas}$ in the formula (1) or $Q_{qualmeas}$ in the formula (2).

Specifically, if threshServingLowQ is broadcast in system information, and $S_{qual}$ of the cell #1 in the time period #1 is greater than $Thresh_{X, HighQ}$ (an example of the first preset threshold), the UE performs reselection to the cell #1.

If threshServingLowQ is not broadcast in system information, and $S_{rxlev}$ of the cell #1 in the time period #1 is

greater than $\text{Thresh}_{X,\ \text{HighP}}$ (an example of the first preset threshold), the UE performs reselection to the cell #1.

$S_{qual}$ or $S_{rxlev}$ of the cell #1 in the time period #1 may be $S_{qual}$ or $S_{rxlev}$ of the cell #1 at at least one moment in the time period #1. $S_{qual}$ or $S_{rxlev}$ at each moment in the at least one moment is determined based on a measurement result (a measurement result #2) at each moment.

The preset condition for reselection of the UE to the cell #1 further includes: Duration in which the UE camps on the current serving cell exceeds preset duration. For example, the preset duration is 1s.

For a specific process in which the UE performs reselection from the serving cell to a cell #2, refer to the foregoing descriptions of cell reselection.

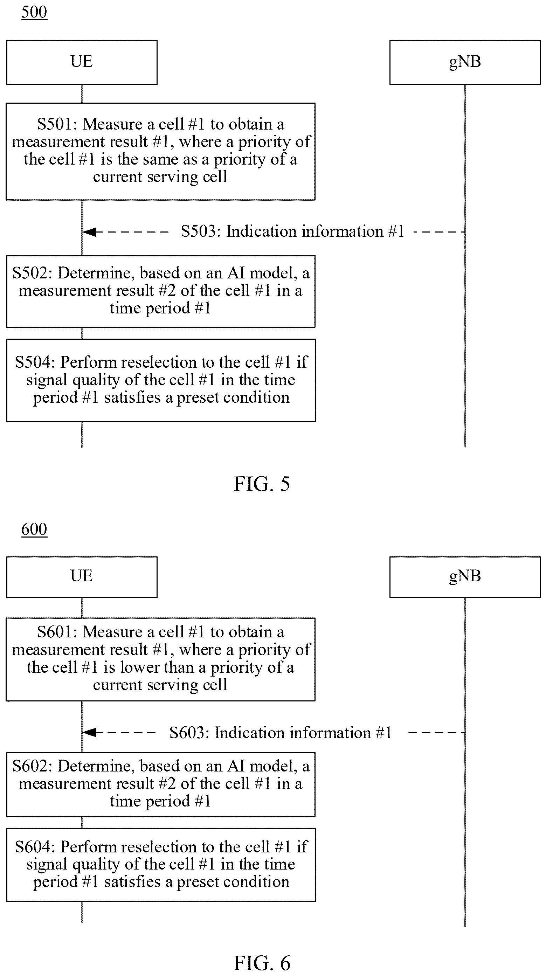

FIG. 5 is an example flowchart of a cell reselection method 500 according to this application. In the method, a priority of a target cell is the same as a priority of a current serving cell. The method 500 may include the following steps.

S501: UE measures a cell #1 (an example of the target cell) to obtain a measurement result #1 (an example of a first measurement result), where a priority of the cell #1 is the same as the priority of the current serving cell.

For example, the UE may determine, based on a SIB message from the current serving cell, that a priority of at least one neighbor cell is the same as the priority of the current serving cell. The UE determines that signal quality of the current serving cell is less than a preset threshold. The UE starts measurement on the at least one neighbor cell at a moment t0 (an example of the first moment), to obtain a measurement result of each cell in the at least one neighbor cell from the moment t0 to a moment t2 (an example of the second moment). The at least one neighbor cell includes the cell #1, and a measurement result of the cell #1 is denoted as a measurement result #1.

The signal quality of the current serving cell may be represented by $S_{rxlev}$ and $S_{qual}$ of the serving cell. When the at least one neighbor cell and the serving cell are intra-frequency cells, if determining that for the current serving cell, $S_{rxlev} \le S_{intrasearchP}$ and $S_{qual} \le S_{intrasearchQ}$, the UE starts measurement on the at least one neighbor cell. When the at least one neighbor cell and the serving cell are inter-frequency cells, if determining that for the current serving cell, $S_{rxlev} \le S_{nonIntrasearchP}$ and $S_{qual} \le S_{nonIntrasearchQ}$, the UE starts measurement on the cell #1.

The measurement result #1 may include at least one measurement result of the cell #1 from the moment t0 to the moment t2.

S502: The UE determines, based on an AI model, a measurement result #2 (an example of a second measurement result) of the cell #1 in a time period #1 (an example of a second time period).

For a start moment, an end moment, and duration of the time period #1, refer to the descriptions of S402.

Optionally, the UE may further predict, based on the AI model, a measurement result of the cell #1 at a moment before the time period #1. The measurement result may be used to verify the measurement result #1.

For example, the UE may predict, at the moment t2 based on the AI model, measurement results of the cell #1 at an interval of T time periods in the time period #1. For details, refer to the descriptions of S402.

Optionally, the UE may further predict, based on the AI model, the measurement result of the cell #1 at the moment before the time period #1. The measurement result may be used to verify accuracy of the measurement result predicted by the AI model. For details, refer to the descriptions of S320.

In a possible implementation, the UE determines signal quality of the at least one neighbor cell (for example, based on the measurement result of the at least one neighbor cell in S501), selects a neighbor cell (denoted as a first cell) that satisfies a cell reselection criterion (refer to a preset condition in an existing cell reselection criterion or a preset condition in S504 below) from the at least one neighbor cell, and predicts a measurement result of each cell in the first cell in the time period #1 (an example of the second time period). The first cell includes the cell #1, and the measurement result of each cell includes the measurement result (an example of the second measurement result) of the cell #1.

In another possible implementation, the UE determines, based on the AI model, the measurement result of each cell in the at least one neighbor cell in the time period #1, where the at least one neighbor cell includes the cell #1.

For the AI model, refer to the descriptions of S320. Input information of the AI model includes the measurement result #1.

Optionally, before S502, the method may further include the following step.

S503: The gNB sends indication information #1 to the UE. Correspondingly, the UE receives the indication information #1 from the gNB.

The indication information #1 may indicate to determine the second measurement result in an AI prediction manner. For details, refer to the descriptions of S403.

S504: Perform reselection to the cell #1 if signal quality of the cell #1 in the time period #1 satisfies the preset condition.

For example, the preset condition includes a condition #1: For a cell, $S_{rxlev} > S1$, and $S_{qual} > S2$, where S1 or S2 is an example of the fourth preset threshold. S1 or S2 may be set to SintraSearchP or $S_{IntraSearchQ}$. $S_{IntraSearchP}$ or $S_{IntraSearchQ}$ is a parameter configured by a network. Optionally, S1 or S2 may be 0.

The signal quality of the cell #1 in the time period #1 is represented by $S_{qual}$ and $S_{rxlev}$ (an example of the first parameter) of the cell #1. $S_{qual}$ or $S_{rxlev}$ of the cell #1 may be determined based on the measurement result #2. For a specific determining manner, refer to the formula (1) or the formula (2). For example, the measurement result #2 may be

$Q_{rxlevmeas}$ in the formula (1) or $Q_{qualmeas}$ in the formula (2).

The preset condition further includes a condition #2: An R value corresponds to a cell is the largest. Alternatively, a cell has a largest quantity of first beams, and an R value of the cell belongs to a first range corresponding to a maximum R value, where the first beam is a beam whose beam-level measurement result (for example, a measurement result at A1 in FIG. 2) is greater than a threshold (for example, configured by using an absThreshSS-BlocksConsolidation parameter).

Specifically, if the gNB does not configure a rangeToBestCell parameter, the UE selects a cell with the maximum R value as the target cell.

If the gNB configures a rangeToBestCell parameter, the UE determines a maximum R value, and determines a cell with a largest quantity of first beams in a cell whose R value is within a range of the maximum R value rangeToBestCell as the target cell. If there are a plurality of cells with the largest quantity of first beams, the UE selects a cell with a largest R value in the plurality of cells as the target cell.

For a computing manner for the R value of the cell, refer to the formula (3) and the formula (4).

For example, if the signal quality of the cell #1 in the time period #1 satisfies the condition #1, and a cell #2 satisfies the condition #2 in the time period #1, the UE may perform reselection to the cell #1.

The preset condition for reselection of the UE to the cell #1 further includes: Duration in which the UE camps on the current serving cell exceeds preset duration. For example, the preset duration is 1s.

For a specific process in which the UE performs reselection from the serving cell to a cell #1, refer to the foregoing descriptions of cell reselection.

FIG. 6 is an example flowchart of a cell reselection method 600 according to this application. In the method, a priority of a target cell is lower than a priority of a current serving cell. The method 600 may include the following steps.

S601: UE measures a cell #1 (an example of the target cell) to obtain a measurement result #1 (an example of a first measurement result), where a priority of the cell #1 is lower than the priority of the current serving cell.

For example, the UE may determine, based on a SIB message from the current serving cell, that a priority of at least one neighbor cell is lower than the priority of the current serving cell. The UE starts measurement on the at least one neighbor cell at a moment t0 (an example of the first moment), to obtain a measurement result of each cell in the at least one neighbor cell from the moment t0 to a moment t2 (an example of the second moment). The at least one neighbor cell includes the cell #1, and the measurement result of each cell includes the measurement result #1.

For example, signal quality of the current serving cell may be represented by $S_{rxlev}$ and $S_{qual}$ of the serving cell. The UE determines that for the current serving cell, $S_{rxlev} \leq S_{nonIntrasearchP}$ and $S_{qual} \leq S_{nonIntrasearchQ}$. The UE starts measurement on the at least one neighbor cell.

The measurement result #1 may include at least one measurement result of the cell #1 from the moment t0 to the moment t2.

S602: The UE determines, based on an AI model, a measurement result #2 (an example of a second measurement result) of the cell #1 in a time period #1 (an example of a second time period).

For a start moment, an end moment, and duration of the time period #1, refer to the descriptions of S402.

For example, the UE may predict, at the moment t2 based on the AI model, measurement results of the cell #1 at an interval of T time periods in the time period #1. For details, refer to the descriptions of S402.

Optionally, the UE may further predict, based on the AI model, a measurement result of the cell #1 at a moment before the time period #1. The measurement result may be used to verify accuracy of the measurement result predicted by the AI model. For details, refer to the descriptions of S320.

In a possible implementation, the UE determines signal quality of the at least one neighbor cell (for example, based on the measurement result of the at least one neighbor cell in S601), selects a neighbor cell (denoted as a first cell) that satisfies a cell reselection criterion (refer to the foregoing cell reselection criterion in the case in which the priority of the target cell is lower than the priority of the current serving cell) from the at least one neighbor cell, and predicts a measurement result of each cell in the first cell at the interval of T time periods in the time period #1. The first cell includes the cell #1, and the measurement result of each cell includes the measurement result of the cell #1.

In another possible implementation, the UE determines, based on the AI model, the measurement result of each cell in the at least one neighbor cell in the time period #1, where the at least one neighbor cell includes the cell #1.

For the AI model, refer to the descriptions of S320. Input information of the AI model includes the measurement result #1.

Optionally, before S602, the method may further include the following step.

S603: The gNB sends indication information #1 to the UE. Correspondingly, the UE receives the indication information #1 from the gNB.

The indication information #1 may indicate to determine the second measurement result in an AI prediction manner. For details, refer to the descriptions of S403.

S604: Perform reselection to the cell #1 if signal quality of the cell #1 in the time period #1 satisfies a preset condition.

The preset condition includes a condition #1: For a cell, $S_{rxlev} > S3$, or $S_{qual} > S4$, where S3 or S4 is an example of the second preset threshold. S3 or S4 may be set to $S_{IntraSearchP}$ or $S_{IntraSearchQ}$. $S_{IntraSearchP}$ or $S_{IntraSearchQ}$ is a parameter configured by a network. Optionally, S3 or S4 may be 0.

The preset condition further includes a condition #2: For a cell, $S_{qual} > Thresh_{X, HighQ}$, or $S_{rxlev} > Thresh_{X, HighP}$. $Thresh_{X, HighQ}$ or $Thresh_{X, HighP}$ is an example of the third preset threshold.

The signal quality of the cell #1 in the time period #1 is represented by $S_{qual}$ or $S_{rxlev}$ (an example of the first parameter) of the cell #1. $S_{qual}$ or $S_{rxlev}$ of the cell #1 may be determined based on the measurement result #2. For a specific determining manner, refer to the formula (1) or the formula (2). For example, the measurement result #2 may be $Q_{rxlevmeas}$ in the formula (1) or $Q_{qualmeas}$ in the formula (2).

Specifically, if threshServingLowQ is broadcast in system information, and $S_{qual}$ of the cell #1 in the time period #1 is greater than a larger value of $S_{IntraSearchQ}$ and $Thresh_{X, HighQ}$, the UE performs reselection to the cell #1.

If threshServingLowQ is not broadcast in system information, and $S_{rxlev}$ of the cell #1 in the time period #1 is greater than a larger value of $S_{IntraSearchP}$ and $Thresh_{X, HighP}$, the UE performs reselection to the cell #1.

The preset condition for reselection of the UE to the cell #1 further includes: Duration in which the UE camps on the current serving cell exceeds preset duration. For example, the preset duration is 1s.

For a specific process in which the UE performs reselection from the serving cell to a cell #2, refer to existing descriptions. Details are not described again.

It should be understood that in this embodiment of this application, the serving cell may be a cell that currently provides a service for the terminal device, or a cell on which the terminal device currently camps, and the terminal device may be in an idle (idle) state or an inactive (inactive) state. The serving cell may also be referred to as a camping cell. The target cell may be a next cell that provides a service for the terminal device, or a cell on which the terminal device is to camp. It may be understood that after camping on the target cell, the terminal device may further perform cell reselection again by using the method provided in the foregoing embodiment.

In this application, the "indication" may be an explicit indication and/or an implicit indication. For example, the implicit indication may be based on a location and/or a resource for transmission; and the explicit indication may be based on one or more parameters, and/or one or more indexes, and/or one or more bit patterns represented by the explicit indication.

It may be understood that some optional features in embodiments of this application may be independent of other features in some scenarios, or may be combined with other features in some scenarios. This is not limited.

It may be understood that the solutions in embodiments of this application may be used in combination, and explanations or descriptions of terms, and similar operations or steps in embodiments may be mutually referenced or explained in embodiments. This is not limited in this application.

It may be further understood that in the foregoing method embodiments, methods and operations implemented by a first device may alternatively be implemented by a component (for example, a chip, a chip system, a processor, or a circuit) of the first device. Methods and operations implemented by a second device may alternatively be implemented by a component (for example, a chip, a chip system, a processor, or a circuit) of the second device. Methods and operations implemented by a measurement and control device may alternatively be implemented by a component (for example, a chip, a chip system, a processor, or a circuit) of the measurement and control device. This is not limited in this application.

It should be understood that the term "and/or" in this application describes only an association relationship between associated objects and represents that three relationships may exist. For example, A and/or B may represent the following three cases: Only A exists, both A and B exist, and only B exists, where A and B may be singular or plural. In addition, the character "/" in this specification generally indicates an "or" relationship between the associated objects, but may also indicate an "and/or" relationship. For details, refer to the context for understanding.

In this application, "at least one item (piece)" means one or more items (pieces), and "at least two items (pieces)" and "a plurality of items (pieces)" mean two or more items (pieces). "At least one of the following items (pieces)" or a similar expression thereof means any combination of these items, including a singular item (piece) or any combination of plural items (pieces). For example, at least one of a, b, or c may represent: a, b, c, a-b, a-c, b-c, or a-b-c, where a, b, and c may be singular or plural. Unless otherwise specified, "a plurality of" in this application means two or more than two.

It may be understood that "sending information to XX (device)" in this application may be understood as that a destination end of the information is the device, and may include directly or indirectly sending the information to the device. "Receiving information from XX (device)" may be understood as that a source end of the information is the device, and may include directly or indirectly receiving the information from the device. Information may undergo necessary processing, for example, a format change, between a source end a destination end for sending of the information. However, the destination end may understand valid information from the source end.

The foregoing describes the method embodiments in embodiments of this application with reference to the accompanying drawings, and the following describes apparatus embodiments in embodiments of this application. It may be understood that the descriptions of the method embodiments and descriptions of the apparatus embodiments may correspond to each other. Therefore, for a part that is not described, refer to the foregoing method embodiments.

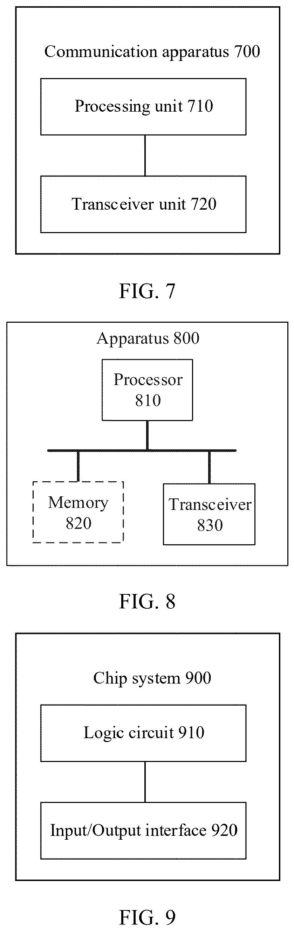

FIG. 7 is a diagram of a communication apparatus 700 according to an embodiment of this application. The apparatus 700 includes a processing unit 710. The processing unit 710 may be configured to implement a corresponding communication function. The processing unit 710 may also be referred to as a communication interface or a communication unit.

Optionally, the apparatus 700 may further include a transceiver unit 720. The transceiver unit 720 may be configured to perform data processing.

Optionally, the apparatus 700 further includes a storage unit. The storage unit may be configured to store instructions and/or data. The transceiver unit 720 may read the instructions and/or the data in the storage unit, so that the apparatus implements actions of different devices in the foregoing method embodiments.

In a possible design, the apparatus 700 may be the terminal device in the foregoing embodiments, or may be a component (for example, a chip) of the terminal device.

It should be understood that the apparatus 700 may correspond to the terminal device in the method 400 in embodiments of this application, or correspond to the UE in the method 500, the method 600, or the method 700. The apparatus 700 may implement the steps or procedures performed by the terminal device in the foregoing method embodiments. The processing unit 710 may be configured to perform receiving and sending-related operations of the terminal device in the foregoing method embodiments. The transceiver unit 720 may be configured to perform processing-related operations of the terminal device in the foregoing method embodiments, for example, processing-related operations of the terminal device in the embodiment shown in FIG. 6.

In another possible design, the apparatus 700 may be the network device in the foregoing embodiments, or may be a component (for example, a chip) of the network device.

It should be understood that the apparatus 700 may correspond to the network device in the method 300 in embodiments of this application, or correspond to the gNB in the method 400, the method 500, or the method 600. The apparatus 700 may implement the steps or procedures performed by the terminal device in the foregoing method embodiments. The processing unit 710 may be configured to perform receiving and sending-related operations of the terminal device in the foregoing method embodiments. The transceiver unit 720 may be configured to perform processing-related operations of the terminal device in the foregoing method embodiments.

FIG. 8 is a schematic block diagram of a communication apparatus 800 according to an embodiment of this application. The apparatus 800 includes a processor 810, and the processor 810 is coupled to a memory 820. Optionally, the apparatus further includes the memory 820. The memory 820 is configured to store a computer program or instructions and/or data. The processor 810 is configured to: execute the computer program or the instructions stored in the memory 820, or read the data stored in the memory 820, to perform the method in the foregoing method embodiments.

Optionally, there is one or more processors 810.

Optionally, there is one or more memories 820.

Optionally, the memory 820 and the processor 810 are integrated together, or are disposed separately.

Optionally, as shown in FIG. 8, the apparatus 800 further includes a transceiver 830. The transceiver 830 is configured to receive and/or send a signal. For example, the processor 810 is configured to control the transceiver 830 to receive and/or send the signal.

In a solution, the apparatus 800 is configured to implement operations performed by the terminal device in the foregoing method embodiments.

For example, the processor 810 is configured to execute the computer program or the instructions stored in the memory 820, to implement related operations of the terminal device in the foregoing method embodiments, for example, the method performed by the terminal device in the embodiment shown in FIG. 3, or the method performed by the UE in the embodiment shown in any one of FIG. 4 to FIG. 6.

In another solution, the apparatus 800 is configured to implement operations performed by the network device in the foregoing method embodiments.

For example, the processor 810 is configured to execute the computer program or the instructions stored in the memory 820, to implement related operations of the network device in the foregoing method embodiments, for example, the method performed by the network device in the embodiment shown in FIG. 3, or the method performed by the gNB in the embodiment shown in any one of FIG. 4 to FIG. 6.

In an implementation process, the steps in the foregoing method can be implemented by using a hardware integrated logic circuit in the processor 810, or by using instructions in a form of software. The method disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 820. The processor 810 reads information in the memory 820, and implements the steps of the foregoing method in combination with hardware of the processor 810. To avoid repetition, details are not described herein again.

It should be understood that in embodiments of this application, the processor may be one or more integrated circuits, and is configured to execute a related program, to perform the method embodiments of this application.

The processor (for example, the processor 810) may include one or more processors and is implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gate logic, transistor logic, a discrete hardware circuit, a processing circuit, other appropriate hardware or firmware, and/or another appropriate combination of hardware and software; and is configured to perform various functions described in this disclosure. The processor may be a general-purpose processor or a dedicated processor. For example, the processor 810 may be a baseband processor or a central processing unit. The baseband processor may be configured to process a communication protocol and communication data. The central processing unit may be configured to enable the apparatus to execute a software program and process data in the software program. In addition, a part of the processor may further include a nonvolatile random access memory. For example, the processor may further store information about a device type.

The program in this application represents software in a broad sense. A non-limiting example of the software includes program code, a program, a subprogram, instructions, an instruction set, code, a code segment, a software module, an application, a software application, or the like. The program may be run on the processor and/or a computer, so that the apparatus can perform various functions and/or processes described in this application.

The memory (for example, the memory 820) may store data needed by the processor (for example, the processor 810) during software execution. The memory may be implemented by using any suitable storage technology. For example, the memory may be any available storage medium that can be accessed by the processor and/or the computer. A non-limiting example of the storage medium includes a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable medium, an optical disc memory, a magnetic disk storage medium, a magnetic storage device, a flash memory, a register, a status memory, a remote mounted memory, a local or remote memory component, or any other medium capable of carrying or storing software, data, or information and accessible by the processor/computer. It should be noted that the memory described in this specification aims to include but is not limited to these memories and any other appropriate types of memory.

The memory (for example, the memory 820) and the processor (for example, the processor 810) may be separately disposed or integrated together. The memory may be configured to be connected to the processor, so that the processor can read information from the memory, and store information in and/or write information into the memory. The memory may be integrated into the processor. The memory and the processor may be disposed in an integrated circuit (for example, the integrated circuit may be disposed in UE or another network node).

FIG. 9 is a schematic block diagram of a chip system 900 according to an embodiment of this application. The chip system 900 (or referred to as a processing system) includes a logic circuit 910 and an input/output interface (input/output interface) 920.

The logic circuit 910 may be a processing circuit in the chip system 900. The logic circuit 910 may be coupled to a storage unit, and invokes instructions in the storage unit, so that the chip system 900 can implement the methods and functions in embodiments of this application. The input/output interface 920 may be an input/output circuit in the chip system 900, and outputs information processed by the chip system 900, or inputs to-be-processed data or signaling information to the chip system 900 for processing.

In a solution, the chip system 900 is configured to implement operations performed by the terminal device in the foregoing method embodiments.

For example, the logic circuit 910 is configured to implement processing-related operations performed by the terminal device in the foregoing method embodiments, for example, processing-related operations performed by the terminal device in the embodiment shown in FIG. 4. The input/output interface 920 is configured to implement sending and/or receiving-related operations performed by the terminal device in the foregoing method embodiments, for example, sending and/or receiving-related operations performed by the terminal device in the embodiment shown in FIG. 6.

In another solution, the chip system 900 is configured to implement operations performed by the network device in the foregoing method embodiments.

For example, the logic circuit 910 is configured to implement processing-related operations performed by the network device in the foregoing method embodiments, for example, processing-related operations performed by the network device in the embodiment shown in FIG. 4. The input/output interface 920 is configured to implement sending and/or receiving-related operations performed by the terminal device in the foregoing method embodiments, for example, sending and/or receiving-related operations performed by the network device in the embodiment shown in FIG. 4.

An embodiment of this application further provides a computer-readable storage medium. The computer-readable storage medium stores computer instructions for implementing the method performed by a communication apparatus (for example, the terminal device and the network device) in the foregoing method embodiments.

An embodiment of this application further provides a computer program product, including instructions. When the instructions are executed by a computer, the method performed by a communication apparatus (for example, the terminal device and the network device) in the foregoing method embodiments is implemented.

An embodiment of this application further provides a communication system. The communication system includes one or more of the terminal device and the network device in the foregoing embodiments.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the foregoing apparatus embodiments are only examples. For example, division into the units is only logical function division, and may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The foregoing units described as separate parts may or may not be physically separate, and parts displayed as units may or may not be physical units, and may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement embodiments, embodiments may be implemented all or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

## Claims

1. A cell reselection method, comprising:

   measuring a target cell to obtain a first measurement result in a first time period;
   determining a second measurement result of the target cell in a second time period based on an artificial intelligence AI model, wherein input information of the AI model comprises the first measurement result, and an end moment of the second time period is later than an end moment of the first time period; and
   performing reselection from a serving cell to the target cell if signal quality of the target cell in the second time period satisfies a preset condition, wherein the signal quality is determined based on the second measurement result.

2. The method according to claim 1, wherein the method further comprises:
   receiving indication information from a network device, wherein the indication information indicates to determine the second measurement result in an AI prediction manner.

3. The method according to claim 1 or 2, wherein

the first measurement result is a layer 1 measurement result, and the second measurement result is a layer 1 measurement result or a layer 3 measurement result; or
the first measurement result is a layer 3 measurement result, and the second measurement result is a layer 3 measurement result.

4. The method according to any one of claims 1 to 3, wherein if a priority of the target cell is higher than a priority of the serving cell, the preset condition comprises that the signal quality of the signal quality of the target cell in the second time period is greater than or equal to a first preset threshold.

5. The method according to any one of claims 1 to 3, wherein if a priority of the target cell is lower than a priority of the serving cell, the preset condition comprises that the signal quality of the target cell in the second time period is greater than or equal to a larger value of the second preset threshold and a third preset threshold.

6. The method according to any one of claims 1 to 3, wherein if a priority of the target cell is the same as a priority of the serving cell, the preset condition comprises that the signal quality of the target cell in the second time period is greater than or equal to a fourth preset threshold, the fourth threshold is greater than 0, the target cell is determined based on a ranking criterion value, and the ranking criterion value is determined based on the signal quality of the target cell in the second time period.

7. The method according to any one of claims 1 to 6, wherein duration of the second time period comprises expected duration of camping on the target cell.

8. The method according to claim 7, wherein the second time period is configured by the network device.

9. The method according to any one of claims 1 to 8, wherein the measurement result is a measurement result of a first measurement quantity, and the first measurement quantity comprises at least one of the following items: reference signal received power RSRP, reference signal received quality RSRQ, a received signal strength indicator RSSI, and a signal to interference plus noise ratio SINR.

10. A cell reselection method, comprising:

sending indication information to a terminal device, wherein the indication information indicates to determine a second measurement result in an AI prediction manner, and the second measurement result is used to determine signal quality of a target cell in a second time period, so that the terminal device performs reselection from a serving cell to the target cell when the signal quality satisfies a preset condition, wherein
the second measurement result is a measurement result of the target cell in the second time period that is determined based on an artificial intelligence AI model, input information of the AI model comprises a first measurement result, the first measurement result comprises a measurement result of the target cell in a first time period, and an end moment of the second time period is later than an end moment of the first time period.

11. The method according to claim 10, wherein

the first measurement result is a layer 1 measurement result, and the second measurement result is a layer 1 measurement result or a layer 3 measurement result; or
the first measurement result is a layer 3 measurement result, and the second measurement result is a layer 3 measurement result.

12. The method according to claim 10 or 11, wherein if a priority of the target cell is higher than a priority of the serving cell, the preset condition comprises that the signal quality of the signal quality of the target cell in the second time period is greater than or equal to a first preset threshold.

13. The method according to claim 10 or 11, wherein if a priority of the target cell is lower than a priority of the serving cell, the preset condition comprises that the signal quality of the target cell in the second time period is greater than or equal to a larger value of the second preset threshold and a third preset threshold.

14. The method according to claim 10 or 11, wherein if a priority of the target cell is the same as a priority of the serving cell, the preset condition comprises that the signal quality of the target cell in the second time period is greater than or equal to a fourth preset threshold, the fourth threshold is greater than 0, the target cell is determined based on a ranking criterion value, and the ranking criterion value is determined based on the signal quality of the target cell in the second time period.

15. The method according to any one of claims 10 to 14, wherein duration of the second time period comprises expected duration of camping on the target cell.

16. The method according to claim 15, wherein the second time period is configured by a network device.

17. The method according to any one of claims 10 to 16, wherein the measurement result is a measurement result of a first measurement quantity, and the first measurement quantity comprises at least one of the following items:
reference signal received power RSRP, reference signal received quality RSRQ, a received signal strength indicator RSSI, and a signal to interference plus noise ratio SINR.

18. A communication apparatus, comprising a unit or a module for performing the method according to any one of claims 1 to 17.

19. A communication apparatus, comprising at least one processor, wherein the at least one processor is configured to execute a computer program stored in a memory, so that the apparatus performs the method according to any one of claims 1 to 17.

20. The apparatus according to claim 19, wherein the apparatus further comprises the memory and/or a communication interface, the communication interface is coupled to the processor, and the communication interface is configured to input and/or output information.

21. A communication system, comprising a terminal device and a network device, wherein the terminal device is configured to perform the method according to any one of claims 1 to 9, and the network device is configured to perform the method according to any one of claims 10 to 17.

22. A computer-readable storage medium, comprising a computer program, wherein
when the computer program runs on a computer, the computer is enabled to perform the method according to any one of claims 1 to 17.

23. A computer program product, wherein the computer program product comprises computer program code; and when the computer program code is run on a computer, the computer is enabled to implement the method according to any one of claims 1 to 17.

FIG. 1

FIG. 2

300

```
┌─────────────────────┐                              ┌─────────────────────┐
│   Terminal device   │                              │   Network device    │
└─────────────────────┘                              └─────────────────────┘
```

S310: Measure a target cell to obtain a first
measurement result in a first time period

◄ − − − − S301: Indication information − − − − − −

S320: Determine a second measurement result
of the target cell in a second time period based
on an artificial intelligence AI model

S330: Perform cell reselection from a serving
cell to the target cell when signal quality of the
target cell in the second time period satisfies a
preset condition

FIG. 3

400

```
┌─────────────────────┐                              ┌─────────────────────┐
│         UE          │                              │        gNB          │
└─────────────────────┘                              └─────────────────────┘
```

S401: Measure a cell #1 to obtain a
measurement result #1, where a priority of
the cell #1 is higher than a priority of a
current serving cell

◄ − − − − − S403: Indication information #1 − − − −

S402: Determine, based on an AI model, a
measurement result #2 of the cell #1 in a
time period #1

S404: Perform reselection to the cell #1 if
signal quality of the cell #1 in the time
period #1 satisfies a preset condition

FIG. 4

500

| UE | | gNB |
|---|---|---|

S501: Measure a cell #1 to obtain a measurement result #1, where a priority of the cell #1 is the same as a priority of a current serving cell

← − − − − − S503: Indication information #1 − − − −

S502: Determine, based on an AI model, a measurement result #2 of the cell #1 in a time period #1

S504: Perform reselection to the cell #1 if signal quality of the cell #1 in the time period #1 satisfies a preset condition

FIG. 5

600

| UE | | gNB |
|---|---|---|

S601: Measure a cell #1 to obtain a measurement result #1, where a priority of the cell #1 is lower than a priority of a current serving cell

← − − − − S603: Indication information #1 − − − −

S602: Determine, based on an AI model, a measurement result #2 of the cell #1 in a time period #1

S604: Perform reselection to the cell #1 if signal quality of the cell #1 in the time period #1 satisfies a preset condition

FIG. 6

Communication apparatus 700

Processing unit 710

Transceiver unit 720

FIG. 7

Apparatus 800

Processor
810

Memory
820

Transceiver
830

FIG. 8

Chip system 900

Logic circuit 910

Input/Output interface 920

FIG. 9

## INTERNATIONAL SEARCH REPORT

| International application No. |
| --- |
| **PCT/CN2024/095123** |

### A. CLASSIFICATION OF SUBJECT MATTER

H04W36/30(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, WPABSC, 3GPP, CJFD: 人工智能, 小区, 信号质量, 优先级, 重选, AI, priority, RSRP, RSRQ, RSSI, SINR, signal quality, artificial intelligence, cell reselect+

### C. DOCUMENTS CONSIDERED TO BE RELEVANT

| Category* | Citation of document, with indication, where appropriate, of the relevant passages | Relevant to claim No. |
| --- | --- | --- |
| Y | CN 116017616 A (VIVO COMMUNICATION TECHNOLOGY CO., LTD.) 25 April 2023 (2023-04-25)<br>  description, paragraphs [0057]-[0175] and [0264]-[0526], and figures 2-10 | 1-23 |
| Y | WO 2022082539 A1 (HUAWEI TECHNOLOGIES CO., LTD.) 28 April 2022 (2022-04-28)<br>  description, page 9, line 17-page 15, line 9, and figure 4 | 1-23 |
| A | CN 113923730 A (SPREADTRUM COMMUNICATIONS (SHANGHAI) CO., LTD.) 11 January 2022 (2022-01-11)<br>  entire document | 1-23 |
| A | CN 115226173 A (HUAWEI TECHNOLOGIES CO., LTD.) 21 October 2022 (2022-10-21)<br>  entire document | 1-23 |
| A | WO 2022139216 A1 (LG ELECTRONICS INC.) 30 June 2022 (2022-06-30)<br>  entire document | 1-23 |
| A | WO 2023070299 A1 (GUANGDONG OPPO MOBILE TELECOMMUNICATIONS CORP., LTD.) 04 May 2023 (2023-05-04)<br>  entire document | 1-23 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 August 2024** | **23 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/095123**

| Patent document cited in search report | | | Publication date (day/month/year) | Patent family member(s) | | | Publication date (day/month/year) |
|---|---|---|---|---|---|---|---|
| CN | 116017616 | A | 25 April 2023 | WO | 2023066289 | A1 | 27 April 2023 |
| WO | 2022082539 | A1 | 28 April 2022 | None | | | |
| CN | 113923730 | A | 11 January 2022 | WO | 2022007579 | A1 | 13 January 2022 |
| | | | | CN | 113923730 | B | 07 April 2023 |
| | | | | EP | 4181572 | A1 | 17 May 2023 |
| | | | | EP | 4181572 | A4 | 20 December 2023 |
| | | | | US | 2023247503 | A1 | 03 August 2023 |
| CN | 115226173 | A | 21 October 2022 | None | | | |
| WO | 2022139216 | A1 | 30 June 2022 | KR | 20230121043 | A | 17 August 2023 |
| | | | | EP | 4268509 | A1 | 01 November 2023 |
| | | | | EP | 4268509 | A4 | 29 May 2024 |
| WO | 2023070299 | A1 | 04 May 2023 | CN | 117751618 | A | 22 March 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310654842